# EUROPÄISCHE PATENTSCHRIFT

(11) **EP 0 676 046 B1**
(45) Veröffentlichungstag und Bekanntmachung des Hinweises auf die Patenterteilung: **16.04.1997**
(21) Anmeldenummer: 94903870.7
(22) Anmeldetag: 23.12.1993
(51) Int. Cl.: G01N 21/55, H01L 35/00

(54) **VERFAHREN UND VORRICHTUNG ZUM NACHWEIS VON OBERFLÄCHENPLASMONEN**
PROCESS AND DEVICE FOR DETECTING SURFACE PLASMONS
PROCEDE ET DISPOSITIF PERMETTANT DE DETECTER DES PLASMONS SUPERFICIELS

(30) Priorität: 24.12.1992 DE 4244086
(43) Veröffentlichungstag der Anmeldung: 11.10.1995
(73) Patentinhaber: FLORIN, Ernst.Ludwig, D-82041 Oberhaching (DE)
(72) Erfinder: FLORIN, Ernst-Ludwig, D-82041 Oberhaching (DE); GAUB, Hermann, D-82166 Gräfelfing (DE)
(74) Vertreter: Grünecker, Kinkeldey, Stockmair & Schwanhäusser Anwaltssozietät
(86) Internationale Anmeldenummer: EP9303678
(87) Internationale Veröffentlichungsnummer: WO9415196

(56) Entgegenhaltungen:
- APPLIED PHYSICS A. SOLIDS AND SURFACES Bd. 48 , 1989 , HEIDELBERG DE Seiten 497 - 500 Y.L. XIE ET AL. 'Bolometric Observation of Nonradiative Decay of Surface Plasmons in Silver'
- APPLIED OPTICS. Bd. 21, Nr. 5 , 1. März 1982 , NEW YORK US Seiten 949 - 954 T.INAGAKI ET AL. 'Photoacoustic study of surface plasmons in metals'
- OPTICS COMMUNICATIONS Bd. 91, Nr. 3/4 , 15. Juli 1992 , AMSTERDAM NL Seiten 255 - 259 B.WANG ET AL. 'Photoacoustic investigation of surface plasmons polaritons in different Ag interfaces'

## Beschreibung

Die Erfindung betrifft ein Verfahren und eine Vorrichtung zum Nachweis von Oberflächenplasmonen mit den Merkmalen gemäß der Oberbegriffe der Ansprüche 1 und 15, sowie ein Thermoelement, insbesondere zum Nachweis von Oberflächenplasmonen mit den Merkmalen des Oberbegriffs des Anspruchs 36.

Die Erfindung dient insbesondere zum Nachweis von Oberflächenplasmonen. Als Oberflächenplasmonen werden kollektive Anregungen (Elektronendichtewellen) eine Elektronengases eines Metalls oder Halbleiters an einer Grenzfläche Metall/Dielektrikum bzw. Halbleiter/Dielektrikum bezeichnet. Aufgrund der starken Lokalisierung der Oberflächenplasmonen an der Metall/Dielektrikum-Grenzfläche, sind ihre Eigenschaften senr empfindlich von den physikalischen Parametern der Grenzschicht abhängig. Diese hohe Sensibilität für Oberflächenphänomene ist ein Grund dafür, daß die Oberflächenplasmonenspektroskopie in den letzten Jahren eine starke Entwicklung sowohl wissenschaftlichen Bereich, als auch in der Sensorik (z.B. Biosensorik, Immunosensorik) erfahren hat.

Zur Anregung bzw. Detektion von Oberflächenplasmonen werden bisher mehrere Prinzipien angewendet.

In H. Raether: "Surface plasma oscillations and their applications" aus "Physics of thin films", herausgegeben von G. Hass, M.H. Francombe und R. W. Hoffmann, New York, Wiley, J., 1977, Band 9: 145-261 wird die Anregung und Detektion von Oberflächenplasmonen mittels Elektronenstreuung beschrieben. Diese Methode ist sehr aufwendig und findet nahezu ausschlißlich im wissenschaftlichen Bereich Anwendung.

Weiterhin sind Oberflächenplasmonen durch Licht anregbar und detektierbar. Die Lichtanregung und -detektion findet sowohl im wissenschaftlichen Bereich als auch in der Sensorik Anwendung. Die physikalischen Eigenschaften der Oberflächenplasmonen legen einen bestimmten Aufbau zur Anregung und Detektion auf optischem Weg fest. In den meisten Fällen wird paralleles monochromatisches p-polarisiertes Licht auf die Grenzfläche Metall/Dielektrikum eingestahl und die reflektierte Intensität wird gemessen. Energie- und Impulserhaltung, die zur Anregung von Oberflächenplasmonen gewährleistet sein müssen, können für eine bestimmte Wellenlänge des anregenden Lichts nur unter einem bestimmten Einfallswinkel, dem Resonanzwinkel, erfüllt werden. Zur Bestimmung des Resonanzwinkels wird deshalb die reflektierte Intensität gegen den Einfallswinkel (Plasmonenspektrum) aufgetragen. Der Resonanzwinkel ist durch den Winkel der minimalen Reflektivität gegeben. Ändern sich die optischen Eigenschaften der Grenzschicht, so kann dies beispielsweise durch eine Verschiebung des Resonanzwinkels beobachtet werden.

In der Zeitschrift für Naturforschung 23a, Seiten 2135-2136, 1968, ist eine Kretschmann-Raether-Konfiguration zur Oberflächenplasmonen-Spektroskopie beschrieben. Diese Konfiguration wird sowohl wissenschaftlich als auch in der Sensorik am meisten verwendet. Der Aufbau, mit dem die Oberflächenplasmonen angeregt und nachgewiesen werden können, ist relativ einfach. Das Licht fällt durch ein Prisma, welches direkt mit einer dünnen Metall- bzw. Halbleiterschicht in Kontakt steht, auf diese Schicht auf und regt in ihr entsprechende Oberflächenplasmonen an. Da die Oberflächenplasmonen auf der dem Prisma gegenüberliegenden Oberfläche der dünnen Schicht angeregt werden, ist bei diesem Aufbau die Metall/Dielektrikum-Grenzfläche für die Sensorik leicht zugänglich.

In der Zeitschrift für Physik 216, Seiten 398-410, 1968 wird eine Otto-Konfiguration beschrieben, bei der ein Prisma mit Abstand zu einem Metallfilm angeordnet ist und in der dem Prisma zugewandten Grenzschicht des Metallfilm Oberflächenplasmonen angeregt werden. Diese Konfiguration hat den Nachteil, daß die Metall/Dielektrikums-Grenzfläche nicht mehr frei zugänglich ist. Für die Sensorik ist sie deshalb wenig geeignet.

Aus den Physical Review Letters 21, Seite 1530, 1968 ist ein weiteres Verfahren zur Oberflächenplasmonen-Spektroskopie unter Verwendung einer Gitterkopplung bekannt, wobei insbesondere die Herstellung des entsprechenden optischen Gitters relativ aufwendig ist.

Bei den drei vorstehend beschriebenen Konfigurationen wird die Anregung der Oberflächenplasmonen über die verminderte Reflektivität für das einfallende monochromatische p-polarisierte Licht beobachtet. Da die Breite der Resonanz bei Verwendung eines entsprechenden Metalls ca. 0,5^{°} betragen kann, muß sowohl der Einfallswinkel als auch der Reflexionswinkel auf ein Hundertstel Grad genau gemessen werden.

Zur Messung der reflektierten Intensität als Funktion des Winkels sind mehrere Verfahren bekannt.

Beispielsweise kann das reflektierte Licht unter dem Reflexionswinkel mit Hilfe einer Fotodiode gemessen werden.

Das Meßsignal wird bei dieser Methode über den an der Grenzfläche ausgeleuchteten Bereich gemittelt. Das laterale Auflösungsvermögen (d.h., die Ortsauflösung) liegt deshalb in der Größenordnung des Strahldurchmessers. Dabei ist von Nachteil, daß das laterale Auflösungsvermögen mit einem überlicherweise als Lichtquelle verwendeten Laser im Bereich von einigen Millimetern liegt. Ein weiterer Nachteil ist, daß der Reflexionswinkel sehr genau gemessen werden muß.

Aus "Proceedings of the SPIE 897", Seiten 100-107, 1988 ist bekannt, paralleles monochromatisches p-polarisiertes Licht mit Hilfe einer Linse zu bündeln. Der Fokus der Linse liegt auf der betrachteten Probenfläche. Der reflektierte Lichtkegel wird mittels einer Kamera ortsaufgelöst detektiert. Das laterale Auflösungsvermögen bei dieser Methode ist durch den Querschnitt des Fokus (einige Mikrometer) auf der Grenzfläche gegeben. Bei diesem Detektionsverfahren ist von Nachteil, daß wiederum der Reflexionswinkel sehr genau gemessen werden muß. Die Verwendung der Kamera und eines zugehörigen Rechners führen zu einer technisch aufwendigen Messung der Reflektivität. Weiter ist von Nachteil, daß zur Nutzung der im Prinzip hohen lateralen Auflösung entweder der Fokus der Linse über die Grenzfläche oder die Grenzfläche selbst bewegt werden muß. Dies erfordert im ersten Fall eine Scanningeinrichtung für den einfallenden Lichtstrahl und im zweiten Fall einen steuerbaren präzisen x-y-Tisch.

Aus der Zeitschrift "Nature 332.14" Seiten 615-617, 1988 ist das Prinzip des Plasmonen-Mikroskops bekannt. Dabei fällt paralleles monochromatisches p-polarisiertes Licht auf die Grenzfläche. Der reflektierte Strahl wird durch eine Abbildungsoptik auf eine Videokamera projiziert. Das Bild der Grenzfläche wird zur nachfolgenden Auswertung an eine elektronische Bildverarbeitung weitergegeben. Durch Variation des Einfallswinkels kann mit einem lateralen Auflösungsvermögen von einigen Mikrometern ein Plasmonenspektrum mittels einer Bildverarbeitung aufgenommen werden. Der Nachteil dieser Methode ist der hohe technische Aufwand, der durch die Abbildungsoptik, Kamera und Bildverarbeitungssystem gegeben ist.

Der Erfindung liegt daher die Aufgabe zugrunde, ein Verfahren und eine Vorrichtung der eingangs genannten Art dahingehend zu verbessern, daß Oberflächenplasmonen technisch vereinfacht mit einem guten lateralen Auflösungsvermögen nachgewiesen werden.

Diese Aufgabe wird durch die kennzeichnenden Merkmale der Ansprüche 1 und 15 gelöst. Da der physikalische Parameter der Materialschicht im Bestrahlungsbereich gemessen wird, muß kein lateraler Transport der Zerfallswärme bis zum elektrothermischen Sensor erfolgen. Es wird direkt die im Bestrahlungsbereich hervorgerufene Temperaturerhöhung der bestrahlten Materialschicht ermittelt. Dem gemäß entspricht das vom elektrothermischen Sensor abgegebene Signal direkt der Temperatur der Materialschicht. Jede Änderung dieser Temperatur ist augenblicklich feststellbar, so daß eine Messung durch den elektrothermischen Sensor mit einer guten zeitlichen Auflösung möglich ist. Auf diese Weise kann die Anregung der Oberflächenplasmonen und damit ihr Nachweis auf einfache Weise durch direktes Abgreifen des Signals des Sensors detektiert werden. Dieses Signal ist eine Meßgröße für die beim Zerfall der Oberflächenplasmonen freigesetzte Wärmemenge. Der Reflektionswinkel und dessen aufwendige Messung, wie beim beschriebenen Stand der Technik nötig, wird nicht mehr benötigt. Die Anregung der Oberflächenplasmonen kann durch eines der geschilderten Anregungsverfahren erfolgen.

Gemäß der Erfindung ergibt sich aus dem vom Sensor abgegebenen Signal eine direkte Aussage über die Temperaturerhöhung. Durch entsprechende Normierung des Sensors ist die Plasmonenresonanz und damit der Nachweis von Oberflächenplasmonen direkt durchführbar.

Dabei ist es weiterhin von Vorteil, wenn eine Auswerteeinheit aus dem Sensorsignal in Abhängigkeit von einem Einfallswinkel der Strahlungsenergie relativ zur Materialschicht ein Plasmonenspektrum bestimmt. Die Variation des Einfallswinkels kann beispielsweise dadurch erfolgen, daß die Materialschicht gegenüber dem einfallenden Strahl verschwenkt wird. Eine Messung der reflektierten oder transmittierten Strahlung in Abhängigkeit von Reflektionswinkel und deren Intensität muß gemäß der Erfindung nicht mehr durchgeführt werden. In gleicher Weise kann das Sensorsignal in Abhängigkeit von der Frequenz der Strahlungsenergie bestimmt werden.

Bei einer vorteilhaften Ausführungsform mißt der elektrothermische Sensor einen Thermoelektrischen Effekt, (z.B. Seebeck-Effekt, Peltier-Effekt) wobei der Sensor aus einem ersten und einem zweiten elektrischen Leiter gebildet ist, die einander unter Bildung zumindest einer Kontaktstelle überlappen.

Dabei wird die Strahlungsenergie zumindest im Bereich der Kontaktstelle der Materialschicht zugeführt, wobei die Kontaktstelle lateral so strukturiert ist, daß sie mit genügend hoher Lichtintensität ausgeleuchtet werden kann.

Ein Sensor ist bekannt, bei dem direkt der durch die Temperatur der Materialschicht definierte Widerstand gemessen wird.

Die Materialschicht oder ein Teil der Materialschicht ist im Bestrahlungsbereich angeordnet, wobei die Materialschicht vorzugsweise außerhalb des Bestrahlungsbereichs vom Widerstandssensor Kontaktiert wird.

Der Widerstandssensor kann dabei aus zwei voneinander beabstandeten und die dünne Materialschicht an zwei Stellen kontaktierenden Materialfilmen gebildet werden. Diese sind in bekannter Weise mit einem Spannungsdetektor zum Abgreifen einer Spannungsdifferenz verbunden. Weiterhin ist es möglich, den Widerstandssensor entsprechend zum 4-Punkt-Meßverfahren über zwei zusätzliche leitfähige Materialfilme mit einer Stromquelle zu verbinden.

Die mit dem Spannungsdetektor verbundenen Materialfilme des Widerstandssensors sind direkt mit der dünnen Materialschicht in Kontakt, während die mit der Stromquelle verbundenen Materialfilme benachbart zur dünnen Materialschicht die anderen Materialfilme kontaktieren. In analoger Weise ist eine umgekehrte Anordnung der mit Spannungsdetektor bzw. Stromquelle verbundenen Materialfilme hinsichtlicht der dünnen Materialschicht möglich.

Erster und zweiter Materialfilm, wobei der erste Materialfilm jeweils mit dem Spannungsdetektor und der zweite Materialfilm jeweils mit der Stromquelle verbunden ist, sind benachbart zur dünnen Materialschicht nebeneinander oder aufeinander unter Bildung einer Kontaktstelle angeordnet. Dabei können die Materialfilme und die dünne Materialschicht aus dem gleichen Material in einem Arbeitsschritt, beispielsweise durch übliche Verfahren der Schichttechnik aufgetragen werden. Andererseits können die ersten und zweiten Metallfilme mit einer im Vergleich zur Materialschicht größeren Dicke aufgetragen werden, wenn deren Eigenwiderstände verkleinert werden sollen.

Der Widerstandssensor und fallweise ein Teil der dünnen Materialschicht kann in Richtung zur zugeführten Strahlungsenergie und/oder auf der Probenseite durch ein Isoliermaterial bedeckt sein. In diesem Fall kann beispielsweise der Widerstandssensor zumindest teilweise im Bestrahlungsbereich angeordnet sein, ohne daß beispielsweise Oberflächenplasmonen direkt im Widerstandssensor angeregt werden können.

Die für den Widerstandssensor verwendete Stromquelle ist möglichst stabil und gibt nur soviel Strom ab, wie zur Detektion des Spannungssignals durch den Spannungsdetektor nötig ist. Der Spannungsdetektor mißt möglichst stromfrei, wobei beispielsweise eine gleichzeitige Messung von Signalforn und Phase möglich ist.

Bei einer vorteilhaften Ausführungsform der Erfindung gibt eine Strahlungsquelle die Strahlungsenergie in Form von elektromagnetischer Strahlung ab. In diesem Zusammenhang ist es insbesondere günstig, wenn die Strahlungsquelle die elektromagnetische Strahlung in Form von monochromatischem p-polarisiertem Licht abgibt. Als Strahlungsquelle ist beispielsweise ein Laser verwendbar, wobei das Laserlicht über eine Sammel- und Zufuhreinrichtung der Materialschicht als Parallellicht zugeführt wird.

Bei einer weiteren Ausführungsgsform der Erfindung moduliert eine Modulationseinrichtung, wie beispielsweise ein Chopper, mit einer definierten Frequenz die Strahlung und die Auswerteeinheit detektiert das Signal des Sensors phasenrichtig. Als Auswerteeinheit ist in diesem Fall beispielsweise ein Lock-in-Verstärker verwendbar.

Soll insbesondere ein Oberflächenplasmonenspektrum bestimmt werden, so ist es von Vorteil, wenn das Thermoelement die Temperaturerhöhung aufgrund der Zerfallswärme der Oberflächenplasmonen durch direkten oder indirekten Kontakt zu einer Oberfläche der dünnen Materialschicht mißt. Bei indirektem Kontakt ist beispielsweise eine dielektrische Schicht oder eine wärmeisolierende Schicht zwischen Materialschicht und Thermoelement angeordnet.

Bei einer anderen Ausführungsform der Erfindung bildet wenigstens ein Leiter des Thermoelements die dünne Materialschicht. Das heißt, die Oberflächenplasmonen werden direkt in wenigstens einem leiter des Thermoelements angeregt und die Temperaturerhöhung tritt direkt im Thermoelement auf.

In diesem Zusammenhang ergibt sich als weiterer Vorteil, daß wenn eine Probe auf zumindest die Materialschicht und/oder eine Kontaktstelle des Sensors aufgebracht wird, der Sensor die durch die Probe modifizierten Oberflächenplasmonen nachweist und die Auswerteeinheit ein für die Probe charakteristisches, modifiziertes Plasmonenspektrum und eine charakteristische Sensorsignalform bestimmt. Die Sensorsignalform erlaubt entsprechend zur Signalamplitude oder Zeitverlauf des Signals, weitere Aussagen über Wärmetransport, Relaxationsverhalten und dergleichen, insbesondere in der Grenzschicht, zu machen. Auf diese Weise ist der Sensor insbesondere für die Biosensorik und Immunosensorik einsetzbar. Die Probe kann in einfacher Weise mittels einer zugehörigen Probenkammer direkt mit einer Oberfläche der Materialschicht bzw. des Sensors in Kontakt gebracht werden, wobei die spezifischen Eigenschaften der Probe das Oberflächenplasmonenspektrum beeinflussen und so charakteristische Eigenschaften der Probe meßbar sind.

Um auf einfache Weise verschiedene Meßgrößen auf einer beschränkten Senoroberfläche gleichzeitig zu erfassen und gleichzeitig zur Messung der Plasmonenresonanz noch zusätzliche Informationen über die Grenzfläche und die zu untersuchende Probe zu enthalten, ist es weiterhin günstig, wenn die Auswerteeinheit durch gleichzeitiges oder sequentielles Auslesen eines Thermoelements mit einer Vielzahl von Kontaktstellen eine entsprechende Anzahl von Messungen durchführt. Durch die Nebeneinanderanordnung mehrer Kontaktstellen und deren gleichzeitige oder sequentielle Auslesbarkeit sind viele Messungen, insbesondere auch Referenzmessungen, auf eng begrenztem Raum gleichzeitig möglich. Dadurch wird gemäß der Erfindung ein zweidimensionales Detektor-Array aufgebaut. Die Kontaktstellen dieses Arrays können in Hinsicht auf die zu messenden Größen spezifisch modifiziert werden. Insbesondere kann neben einem spezifischen Effekt in unmittelbarer Nachbarschaft durch eine weitere Kontaktstelle eine Referenzmessung durchgeführt werden. Dies ermöglicht es zum Beispiel in der Biosensorik, die spezifische von der unspezifischen Proteinbindung an eine Oberfläche zu unterscheiden.

Eine zu der vorstehend beschriebenen Anordnung einer Vielzahl von Thermoelementen analoge Anordnung der Widerstandselemente bzw. Widerstandssensoren ist ebenso möglich. Beispielsweise können eine Vielzahl von Widerstandssensoren mit zugeordneter Materialsschicht sequentiell in einer eine Probe enthaltenden Probekammer angeordnet sein. Wird die Probenkammer beispielsweise in Längsrichtung von der Probe durchströmt, so ist eine lineare Anordnung der dünnen Materialschichten mit zugeordneten Widerstandssensoren (Sensor-Array) besonders gut für Durchflußmessungen geeignet, wobei beispielsweise zeitliche Veränderungen der Probe meßbar sind.

In analoger Weise sind eine Vielzahl von dünnen Materialschichten entlang eines Umfangs einer kreisförmigen Probenkammer in dieser anordbar, wobei die Widerstandssensoren radial nach außen von der Probenkammer abstehen. Bei diesem Ausführungsbeispiel sind eine Vielzahl von Messungen auf relativ kleinem Raum möglich.

Ist in diesem Zusammenhang der Widerstandssensor und teilweise ein Teil der dünnen Materialschicht in Richtung zur zugeführten Strahlungsenergie bzw. zur Probe durch ein Isoliermaterial bedeckt, kann der gesamte obere Halbraum bezüglich des vom Isoliermaterial bedeckten Widerstandssensors von der Probenkammer bedeckt werden.

Bei einem weiteren Beispiel für einen Widerstandssensor ist die dünne Materialschicht zwischen den Kontaktstellen zum Widerstandssensor beispielsweise mäanderförmig angeordnet, wodurch sich eine relativ große Länge der dünnen Materialschicht ergibt. Auf diese Weise ergibt sich ein größerer Temperatureffekt und damit eine erleichterte Messung des Widerstands.

Bei dem erfindungsgemäßen Verfahren beziehungsweise Vorrichtung wird folglich gemäß einer Ausführungsform der dünne Materialfilm, in dem Oberflächenplasmonen durch eines der vorstehend beschriebenen Standardverfahren angeregt werden, durch zwei verschiedene Metalle, Halbleiter oder leitende Legierungen derart ersetzt, daß die beiden Metallfilme ein Ultradünnfilmthermoelement bilden und zum Beispiel die Thermospannung zwischen den beiden Metallen gemessen werden kann. Die Filmdicke beträgt zwischen 50 und 600 Å, vorzugsweise 200 bis 400 Å. Die Dicke der Filme ist so gewählt, daß an der Kontaktstelle der beiden Filme optimale Bedingungen zur Anregung der Oberflächenplasmonen gegeben sind. Die Kontaktstelle ist lateral so strukturiert, daß sie mit genügend hoher Lichtintensität ausgeleuchtet werden kann.

Da die durch die Zerfallswärme der Oberflächenplasmonen an der Kontaktstelle erzeugte Thermospannung von der Fläche der Kontaktstelle weitgehend unabhängig ist, kann diese beliebig verkleinert werden. Dies gilt zumindest für den Bereich, in dem das Elektronengas in lateraler Ausdehnung als frei gelten kann. Durch die Größe der Kontaktstelle ergibt sich das laterale Auflösungsvermögen. Die Kontaktstelle weist vorzugsweise eine Fläche von = 1 mm² auf.

Die Filme des Sensors sind in einfacher Weise durch entsprechende Masken auf einem Substrat auftragbar. Dieser Vorgang entspricht dem Auftragen von unterschieldichen Schichten bei der Halbleiterbauelementherstellung, wobei die Auftragung beispielsweise durch Aufdampfen oder dergleichen durchgeführt wird. Durch das direkte Aufbringen des Sensors auf dem Substrat ist dieser zusammen mit dem Substrat leicht austauschbar. Das Substrat wie auch die Vorrichtung, insbesondere Sammel- und Zufuhreinrichtung usw., müssen bestimmte bekannte Bedingungen erfüllen, um Oberflächenplasmonen in der Materialschicht anregen zu können. Solche Bedingungen gelten beispielsweise für die Brechungindizes, die Durchlässigkeit gegenüber elektromagnetischer Strahlung oder dergleichen.

Bei einer Ausführungsform der Erfindung ist die Sammel- und Zufuhreinrichtung durch wenigstens ein Prisma oder eine Zylinderlinse gebildet. Drei ist es weiterhin von Vorteil, wenn das Substrat mit Sensor mit einem geeigneten Immersionsöl auf das Prisma beziehungsweise auf die Zylinderlinse aufgebracht wird. Die Verwendung von geeignetem Immersionsöl schafft eine problemlose optische Verbindung zwischen austauschbarem Substrat mit Sensor und den festen optischen Bestandteilen, wie Prisma oder Zylinderlinse.

Weiterhin betrifft die Erfindung ein Thermoelement, insbesondere zum Nachweis von Oberflächenplasmonen. Thermoelemente in Dünnfilmtechnik sind bekannt, mit denen an kleinsten Körpern mit guter Orts- und Zeitauflösung Temperaturen gemessen werden können, Die Filmdicke der Thermoelemente beträgt einige µm und mehr.

Insbesondere zur Messung der Zerfallswärme von Oberflächenplasmonen mit einer hinreichend guten örtlichen und zeitlichen Auflösung sind diese bekannten Dünnfilmthermoelemente nicht geeignet, da die Zerfallswärme der Oberflächenplasmonen an der Metall-Dielektrikumsgrenzschicht in einem Bereich von einigen Nanometern abgegeben wird. Gemäß der Erfindung wird zumindest ein leitfähiger Film mit einer Filmdicke von nur 50 A (5 nm) bis 600 A (60 nm) ausgebildet. Diese Filmdicke führt zu einer hinreichenden Größe der elektrischen Leitfähigkeit innerhalb der Filme.

Ein solches Thermoelement kann auch nur einen leitfähigen Film aufweisen, der beispielsweise auf einem Bulk-Material als zweiten Leiter und einem Isolator aufgetragen ist. Im Überlappbereich der beiden Leiter ist eine Kontaktstelle zur Messung eines thermoelektrischen Effekts gebildet. Außerdem können beide Leiter als leitfähige Film auf einem gemeinsamen Substrat aufgebracht werden.

Wählt man als Metalle für die Filme Gold und Silber, so sind Fimdicken von einigen Nanometern ausreichend.

Wie vorstehend beschrieben, sind ein oder mehrere dieser Thermoelemente (Ultradünnfilmthermoelemente) und/oder Widerstandssensoren auf ein und demselben Substrat aufbringbar. Die hierfür notwendige laterale Strukturierung kann durch ein thermisches Aufdampfen durch eine Maske hindurch erreicht werden Die Kontaktstellen der unterschiedlichen Filme bzw. dünnen Materialschichten liegen so dicht nebeneinander, daß bei Verwendung der Thermoelemente bwz. Widerstandssensoren zum Nachweis von Oberflächenplasmon gemäß dem vorstehend geschilderten Verfahren beziehungsweise Vorrichtung, durch das einfallende Licht gleichzeitig in allen Thermoelementen, bzw. allen dünnen Materialschichten, Oberflächenplasmonen angeregt werden können. Die Ultradünnfilmthermoelemente können auf ein und demselben Substrat entweder unabhängig sein, das heißt jedes Thermoelement besteht aus einem Leiterpaar, welches von den anderen elektrisch isoliert ist, oder die Thermoelemente sind durch einen gemeinsamen Leiter derart verbunden, daß die Thermospannung an verschiedenen Stellen mittels des jeweiligen anderen Leiters abgegriffen werden kann. Der Abstand der einzelnen Thermoelemente bzw. dünnen Materialschichten wird prinzipiell durch die laterale Zerfallslänge der Oberflächenplasmonen bestimmt und kann zumindest bis in den µm-Bereich reduziert werden. Dabei ist es auch möglich, innerhalb einer Probenkammer Thermoelemente und Widerstandssensoren miteinander zu kombinieren.

Wird die Erfindung in der Biosensorik eingesetzt, ergibt sich durch die Verwendung der Kombination Silber-/Goldfilm gegenüber dem in der Biosensorik häufig verwendeten reinen Goldfilm ein verbessertes vertikales Auflösungsvermögen der Oberflächenplasmonenspektroskopie. Die Goldoberfläche bleibt dabei chemisch gegenüber der aufgebrachten Probe erhalten. Die Probe wird auf die Kontaktstelle bzw. auf die dünne Materialschicht aufgebracht. Als Probe kann ein Gas, eine Flüssigkeit, ein Festkörperfilm oder dergleichen verwendet werden. Die Kontaktstelle/Materialschicht ist für die jeweilige Probe so modifiziert, daß nur die jeweils relevante Größe gemessen wird, wie zum Beispiel die Konzentration eines bestimmten Proteins in einer Lösung, die Gegenwart eines bestimmten Antikörpers oder Antigens in einer Lösung, die Konzentration eines bestimmten Gases oder einer Flüssigkeit, Änderungen des Aggregatzustandes eine Stoffes oder dergleichen. Durch die Größe und Form des Meßsignals des Sensors normiert auf die einfallende Leistungsdichte der Strahlungsenergie sind zusätzliche Informationen über die Metall-Dielektrikums-Grenzfläche erhältlich, die durch die bisherigen Verfahren nicht zugänglich sind.

Neben der Verwendung zur Oberflächenplasmonenspektroskopie ist die Erfindung und insbesondere das Thermoelement zur hochempfindlichen Oberflächentemperaturmessung einsetzbar.

Im folgenden werden vorteilhaft Ausführungsbeispiele der Erfindung annand der in der Zeichnung beigefügten Figuren näher erläutert und beschrieben.

Es zeigen:
- Fig. 1: eine seitliche Schnittansicht einer Ausführungsform der Erfindung;
- Fig. 2: eine Draufsicht auf die Ausführungsform nach Figur 1, wobei Figur 1 einem Schnitt entlang der Linie I-I entspricht;
- Fig. 3: eine Draufsicht auf ein weiteres Ausführungsbeispiel der Erfindung;
- Fig. 4: eine Draufsicht auf einen Widerstandssensor;
- Fig. 5: einen Schnitt entlang der Linie V-V auf Figur 4;
- Fig. 6: ein weiteres Beispiel für einen Widerstandssensor; und
- Fig. 7: ein Ausführungsbeispiel eines Sensor-Arrays.

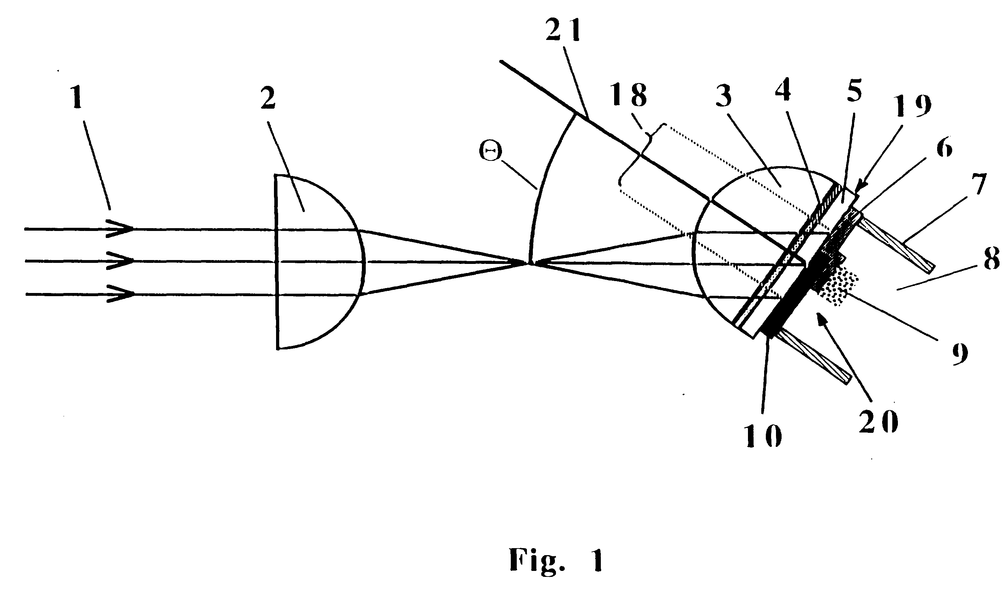

In Figur 1 ist eine Ausführungsform einer Vorrichtung zur Durchführung des erfindungsgemäßen Verfahrens dargestellt. Ein paralleles Lichtbündel 1 ist über eine Sammel- und Zufuhreinrichtung 2,3 als paralleler Lichtstrahl einer Substrat-Sensor-Einheit 19 zuführbar. Insbesondere können die Lichtstrahlen p-polarisiert, zirkularpolarisiert oder aber unpolarisiert sein. Im wesentlichen ein mittlerer Bereich 18 der Einheit 19 wird ausgeleuchtet. Die Lichtstrahlen 1 treffen unter einem Einfallswinkel von H gegenüber einer Mittelsenkrechten 21 der Substrat-Sensor-Einheit 19 auf.

Die Substrat-Sensor-Einheit 19 umfaßt ein Substrat oder Objektträger 5 und ein Sensor 20. Der Sensor 20 ist auf einer Seite des Objektträgers 5 aufgebracht. Die gegenüberliegende Seite des Objektträgers wird mittels einer Immersionsflüssigkeit 4 mit einer Zylinderlinse 3 der Zufuhr- und Sammeleinrichtung 2,3 optisch verbunden. Der Zylinderlinse 3 werden von einer zweiten Zylinderlinse 2 der Zufuhr- und Sammeleinrichtung die Lichtstrahlen 1 zugeführt.

Der Sensor 20 ist durch zwei Metallfilme 6 und 10 gebildet, die einander im mittleren Bereich der Substrat-Sensor-Einheit 19 überlappen. Der Überlappungsbereich bildet eine Kontaktstelle 16 zur Messung von Thermospannung oder Thermostrom. Der Metallfilm 6 ist aus reinem Gold und der Metallfilm 10 aus reinem Silber gebildet. Dotierte Gold- beziehungsweise Silberfilme sind ebenfalls verwendbar. Die Kontaktstelle 16 der beiden Schichten bildet einen effektspezifischen Sensoroberflächenbereich 9 mittels dem in einem Probenmedium 8 enthaltene Proben detektierbar sind. Das Probenmedium 8 ist in einer Probenkammer 7 enthalten, die auf der dem Substrat 5 gegenüberliegenden Seite des Sensors 20 angeordnet ist.

Der von den Lichtstrahlen 1 ausgeleuchtete Bestrahlungsbereich 18 ist im wesentlichen symmetrisch zur Mittelsenkrechten 21 angeordnet, wobei insbesondere der Kontaktbereich der beiden Metallfilme ausgeleuchtet ist.

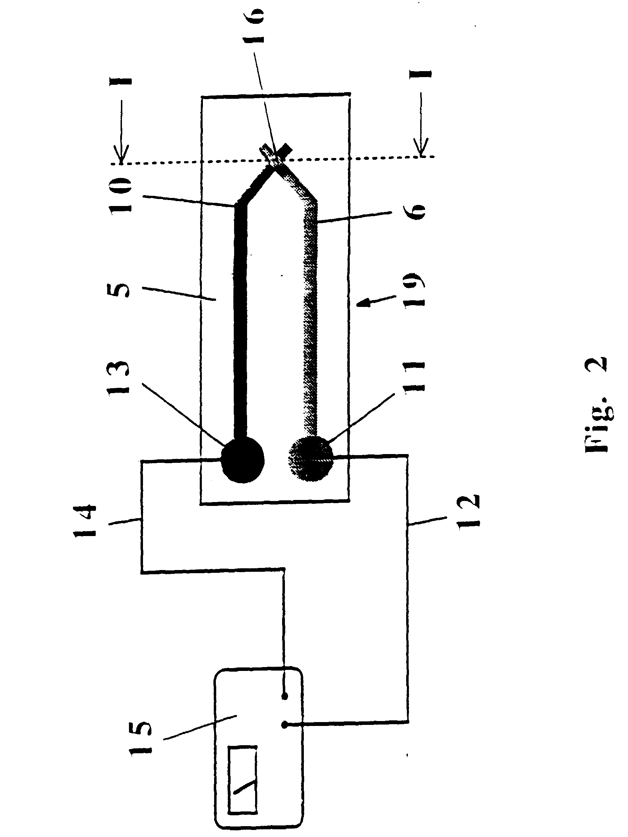

In Figur 2 ist die erfindungsgemäße Ausführungsform nach Figur 1 in Draufsicht dargestellt. Der Objektträger 5 weist eine im wesentlichen rechteckförmige Gestalt auf. Die Metallfilme 6 und 10 erstrecken sich im wesentlichen parallel zu den längeren Seiten des Objektträgers 5. An einem Ende eines jeden Metallfilm ist eine im wesentlichen kreisförmige Anschlußstelle 11 beziehungsweise 13 gebildet. An ihren gegenüberliegenden Enden verlaufen die Metallfilme in etwa unter einem Winkel von 45° abgeknickt aufeinander zu und bilden in einem Überlappbereich die Kontaktstelle 16. Beide Metallfilme 6 und 10 erstrecken sich etwas über die Kontaktstelle 16 hinaus.

Die Darstellung nach Figur 1 entspricht einem Schnitt entlang der Linie I-I aus Figur 2.

An den Anschlußstellen 11 und 13 sind Kupferverbindungen 12 und 14 angeschlossen. Diese stellen eine Verbindung zu einer Auswerteeinheit 15 her. Mittels dieser ist die durch das erfindungsgemäße Thermoelement gemessene Thermospannung oder ein entsprechender Thermostrom registrierbar und auswertbar.

Die Auswerteeinheit 15 ist entweder durch ein Spannungsmeßgerät oder einen Lock-in-Verstärker gebildet. Bei Verwendung eines Lock-in-Verstärkers wird durch beispielsweise einen Chopper eine entsprechende Modulierung der einfallenden Lichtintensität erzeugt. Das Spannungsmeßgerät kann auf einfache Weise aus einer Operationsverstärkerschaltung aufgebaut werden. Diese operationsverstärker sollten nur eine sehr geringe Drift und ein sehr geringes Offset besitzen. Sollen mehrere Anschlußverbindungen von unterschiedlichen Thermoelementen ausgemessen werden, so kann zwischen diesen mittels eines Meßstellenumschalters umgeschaltet werden.

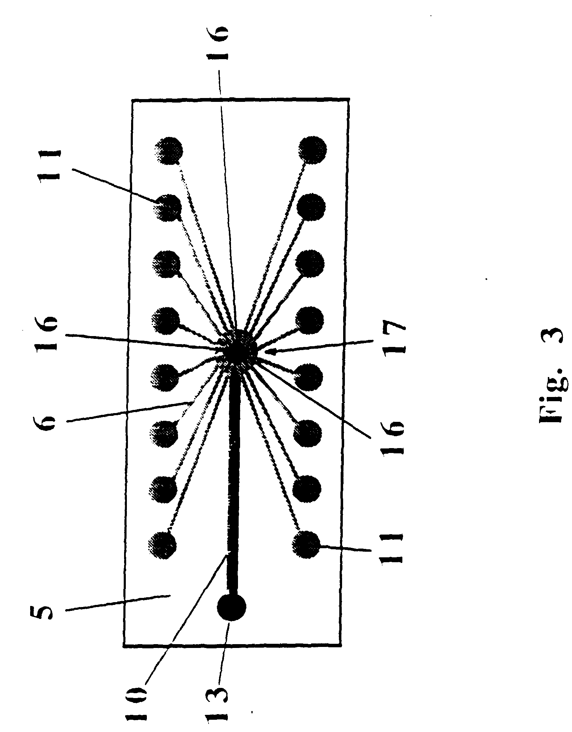

In Figur 3 ist eine andere Asführungsform der Erfindung dargestellt. Bei dieser sind auf einem Objektträger 5 eine Anzahl von Metallfilmen 6 aufgebracht. Diese sind mit jeweils einem Ende auf einer gemeinsamen, im wesentlichen kreisförmigen Anschlußfläche 17 des anderen Metallfilms 10 angeordnet. Die Überlappungsbereiche der Metallfilme 6 mit dem Metallfilm 10 auf der Anschlußfläche 17 bilden eine Vielzahl von Kontaktstellen 16. Diese sind entlang des Umfangs der Anschlußfläche 17 voneinander beabstandet angeordnet.

An ihren gegenüberliegenden Enden weisen die Metallfilme 6 entsprechende Anschlußstellen 11 auf, die über Kupferverbindungen mit der Auswerteeinheit 15 nach Figur 2 verbunden sind. In entsprechender Weise wird die Anschlußstelle 13 des Metallfilms 10 mit der Auswerteeinheit 15 verbunden.

Im folgenden wird kurz die Herstellung und die Verwendung der erfindungsgemäßen Vorrichtung beziehungsweise des Thermoelements beschrieben.

In einem ersten Arbeitsschritt wird auf den Objektträger 5 durch eine Maske der Metallfilm 10, zum Beispiel hochreines Silber, mit entsprechender Dicke, zum Beispie 250 A, und entsprechender Geometrie aufgebracht. In einem zweiten Schritt wird der Metallfilm 6, zum Beispiel hochreines Gold, ebenfalls mit entsprechender Dicke, zum Beispiel 250 A, und entsprechender Geometrie aufgebracht. Das Aufbringen kann beispielsweise durch thermisches Verdampfen in einer Vakuumaufdampfanlage durchgeführt werden. Die beiden Metallfilme werden so aufgebracht, daß sie nur eine Kontaktstelle 16 besitzen, die beispielsweise eine Fläche von ungefähr 0,5mm² aufweist.

Natürlich sind die beiden Metallfilme auch in umgekehrter Reihenfolge auf dem Substrat auftragbar. In diesem Fall sind die Kontaktstellen insbesondere bei der Ausführungsform nach Figur 3 von der Anschlußfläche 17 nach oben abgedeckt.

Die Leitungen 12 und 14 werden an den Anschlußstellen 11 und 13 an die Metallfilme 6 und 10 angeschlossen. Die Leitungen werden dahingehend ausgewählt, daß sowohl an den Anschlußstellen 11 und 13 ais auch an den Kontaktstellen zur Auswerteeirheit möglichst kleine Kontaktspannungen auftreten. Beispielsweise können die Leitungen aus reinem Kupfer gebildet werden.

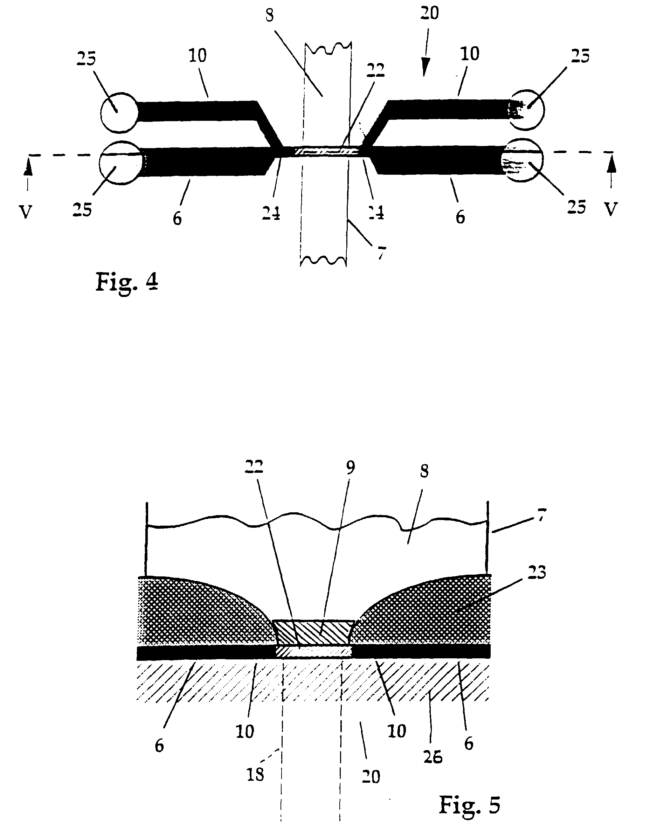

In Figur 4 ist ein Widerstandssensor bzw. ein Widerstandselement 20 zur temperaturabhängigen Widerstandsmessung dargestellt. Dieser ist durch jeweils 2 leitfähige Materialfilme 6,10 seitlich zur dünnen Materialschicht 22 gebildet. Beispielsweise sind die Materialfilme 10 mit einem nicht dargestellten Spannungsdetektor und die Materialfilme 6 mit einer nicht dargestellten Stromquelle verbunden. An den der dünnen Materialschicht 22 gegenüberliegenden Enden der Materialfilme 6 bzw. 10 sind kreisformige Anschlußkontakte 25 angeordnet. Über diese ist der Widerstandssensor 20 mit dem Spannungsdetektor und der Stromquelle bzw. einer Auswerteeinheit 15 nach Figur 2 verbunden.

Die stromführenden Materialfilme 6 kontaktieren die im wesentlichen rechteckförmige Materialschicht an ihren kürzeren Rechteckseiten. Die Materialfilme 10 zur Spannungsdetektion verlaufen an ihren der Materialschicht 22 zugeordnetem Ende in Richtung zu dem Materialfilm 6 und kontaktieren diese von oben in Kontaktbereichen 24.

Eine Probenkammer 7 erstreckt sich im wesentlichen über die Breite der dünnen Materialschicht 22 zwischen den Kontaktbereichen 24, wobei innerhalb der Probenkammer eine entsprechende Probe 8 mit der Materialschicht 22 in Kontakt steht.

Erstreckt sich die Probenkammer 7 senkrecht zur Materialschicht 22 über eine entsprechende Länge, so sind beispielsweise eine Vielzahl von Widerstandssensoren 20 in Längsrichtung der Probenkammer mit zugehöriger Materialschicht 22 anordbar. Auf diese Weise ist beispielsweise eine in Längsrichtung durch die Probenkammer 7 strömende Probe 8 an unterschiedlichen Stellen in Strömungsrichtung meßbar.

In Figur 5 Ist ein Schnitt entlang der Linie V-V aus Figur 4 dargestellt. Im Unterschied zur Figur 4 ist zusätzlich auf dem Widerstandssensor 20 ein Isoliermaterial 23 aufgebracht. Dieses bedeckt zumindest die Bereiche der Materialfilme 6 und 10, die benachbart zur Materialschicht 22 angeordnet sind. Auf diese Weise kann die Probenkammer 7 und damit die Probe 8 im wesentlichen im gesamten oberen Halbraum oberhalb des Isoliermaterials 23 sich ausdehnen. Weiterhin kann der Bestrahlungsbereich 18 sich ebenfalls bis auf das Isoliermaterial 23 erstrecken.

Im Unterschied zu dem in Figur 4 dargestellten Beispiel sind die Materialfilme 6 und 10 mit gleicher Dicke und nebeneinander auf einem Substrat 26 angeordnet, wobei Materialschicht 22 und Materialfilme 6 und 10 die gleiche Dicke Aufweisen. In Figur 5 kontaktiert außerdem im Unterschied zu Figur 4 der Materialfilm 10 die Materialschicht 22 seitlich, während der Materialfilm 6 den Materialfilm 10 kontaktiert. Ansonsten ist die Anordnung der Materialfilme 6 und 10 wie in Figur 4 dargestellt.

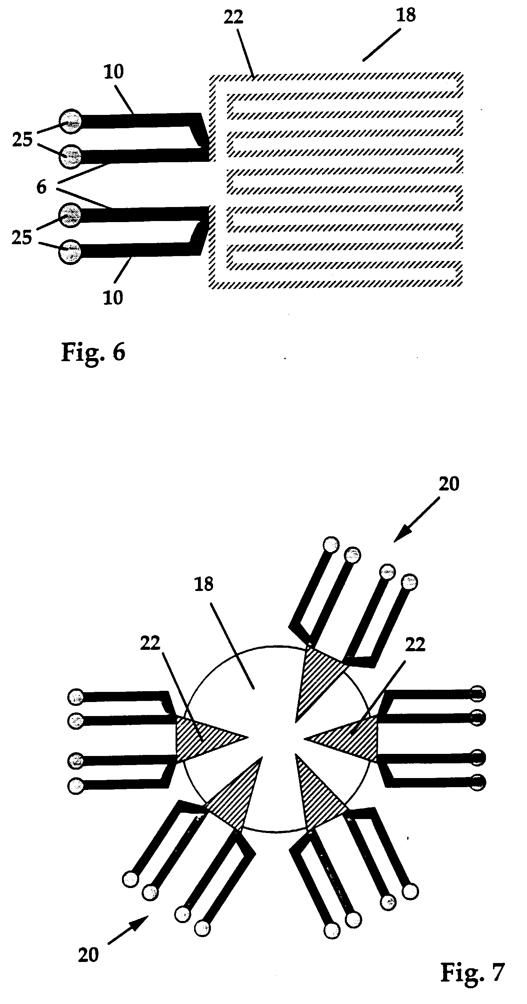

In Figur 6 ist der Widerstandssensor 20 auf einer Seite einer Probenkammer 7 oder eines Bestrahlungsbereichs 18 angeordnet. Gleiche Bezugszeichen kennzeichnen gleiche Teile und werden nicht weiter erwähnt.

Im Unterschied zu den bisher beschriebenen Beispielen des Widerstandssensors ist die Materialschicht 22 mäanderförmig angeordnet, wobei ein Ende der Materialschicht mit einem Materialfilmpaar 6,10 und das andere Ende mit einem anderen Materialfilmpaar 6,10 in Kontakt steht.

In Figur 7 ist eine kreisförmige Probenkammer 7 oder ein kreisförmiger Bestrahlungsbereich 18 dargestellt. Eine Vielzahl von Widerstandselementen 20 ist entlang des Umfangs der Probenkammer 7 bzw. des Bestrahlungsbereichs 18 beabstandet zueinander angeordnet. Die jedem Widerstandssensor 20 zugeordnete dünne Materialschicht 22 ist im wesentlichen dreieckförmig, wobei der Widerstandssensor 20 mit der Hypotenuse des Dreiecks in Kontakt ist und die Dreiecksspitze im wesentlichen zum Mittelpunkt der Probenkammer 7 bzw. des Bestrahlungsbereichs 18 weist.

In den in Figur 6 und 7 dargestellten Beispielen kann die Probenkammer 7 naturgemäß eine vom Bestrahlungsbereich 18 abweichende Form aufweisen.

Weiterhin sind die Materialfilme für die Widerstandssensoren beispielsweise auf einem zur Materialschicht identischen Material cder aus den vorstehend bezüglich des Thermoelements beschriebenen Materialien herstellbar. Materialfilme und Materialschicht können mit gleicher Dicke oder unterschiedlicher Dicke ausgebildet werden.

Die optischen Komponenten der Erfindung, das heißt die Sammel- und Zufuhreinrichtung, werden so zueinander justiert, daß ein monochromatischer p-polarisierter Lichtstrahl 1 parallel unter einem genau definierten Einfallswinkel H mit genügend hoher Leistungsdichte auf die Kontaktstelle 16 fällt und zumindest diese vollständig ausleuchtet. Mittels der Auswerteeinheit wird an den Leitungen 12 und 14 die Thermospannung beziehungsweise Thermostrom zwischen den Metallfilmen 6 und 10 abgegriffen. Die Thermospannung ist proportional zu einer Temperaturerhöhung, die durch die Zerfallswärme von durch das p-polarisierte Licht angeregten Oberflächenplasmonen erzeugt wird. Eine vollständige Resonanzkurve der Oberflächenplasmonen erhält man, indem man den Betrag der Differenz der Thermospannungen zwischen einerseits beleuchteter Kontaktstelle 16 und andererseits unbeleuchteter Kontaktstelle 16 im Bereich der Oberflächenplasmonenanregung gegen den Einfallswinkel aufträgt. Das detektierte Signal entspricht der durch die Zerfallswärme der Oberflächenplasmonen und einer allgemeinen Absorption erzielten Temperaturerhöhung an der Kontaktstelle 16.

Da Oberflächenplasmonen nur mit p-polarisiertem Licht angeregt werden könne, läßt sich die allgemeine Absorption durch eine Messung mit s-polarisiertem Licht bestimmen. Durch eine Nomierung des Thermoelements, das heißt die Angabe der Spannungsänderung pro Grad Celsius kann die Temperatur an der Grenzfläche bestimmt werden. Gemessen wird mit dieser Methode eine quasistationäre Gleichgewichtstemperatur an der Kontaktstelle 16 in den Metallfilmen.

Wird auf die Kontaktstelle bzw. Materialschicht 22 die zu messende Probe im Probenmedium 8 aufgebracht, reagieren die Oberflächenplasmonen an der Grenzfläche zur Probe sehr empfindlich auf die geänderten physikalischen Parameter der Grenzschicht. Die Änderung dieser Parameter ist durch eine Veränderung im Oberflächenplasmonenspektrum detektierbar.

## Patentansprüche

1. Verfahren zum Nachweis von Oberflächenplasmonen, welche in einer dünnen Materialschicht durch in einem Bestrahlungsbereich (18) der Materialschicht (6,22) zugeführte Strahlungsenergie angeregt werden und welche bei ihrem Zerfall eine eine Temperaturerhöhung in der Materialschicht hervorrufende Zerfallswärme abgeben, **dadurch gekennzeichnet**, daß ein der Materialschicht (6,22) zugeordneter, elektrothermischer Sensor (20) die Temperatur der Materialschicht im Bestrahlungsbereich (18) mißt und ein der Temperaturerhöhung entsprechendes Signal abgibt.

2. Verfahren nach Anspruch 1, **dadurch gekennzeichnet**, daß eine Auswerteeinheit (15) aus dem Signal in Abhängigkeit von einem Einfallswinkel φ der Strahlungsenergie relativ zur Materialschicht (6, 22) oder in abhängigkeit von der Frequenz der Strahlungsenergie ein Plasmonenspektrum in der dünnen Materialschicht bestimmt.

3. Verfahren nach Anspruch 1 oder 2, **dadurch gekennzeichnet**, daß der elektrothermische Sensor (20) einen thermoelektrischen Effekt mißt.

4. Verfahren nach Anspruch 3, **dadurch gekennzeichnet**, daß der thermoelektrische Effekt an wenigstens einer Kontaktstelle (16) von ersten und zweiten, den Sensor (20) bildenden elektrischen Leitern (6, 10) gemessen wird.

5. Verfahren nach Anspruch 4, **dadurch gekennzeichnet**, daß die Strahlungsenergie (1) zumindest im Bereich der Kontaktstelle (16) der Materialschicht (6, 10) zugeführt wird.

6. Verfahren nach wenigstens einem der vorangehenden Ansprüche, **dadurch gekennzeichnet**, daß der Sensor (20) durch direkten oder indirekten Kontakt zu einer Oberfläche der dünnen Materialschicht die Temperaturerhöhung mißt.

7. Verfahren nach wenigstens einem der vorangehenden Ansprüche, **dadurch gekennzeichnet**, daß die dünne Materialschicht wenigstens einen Leiter (6) des Sensors (20) bildet.

8. Verfahren nach wenigstens einem der Ansprüche, **dadurch gekennzeichnet**, daß die Auswerteeinheit (15) durch gleichzeitiges oder sequentielles Auslesen eines Sensors (20) mit einer Vielzahl von Kontaktstellen (16) eine entsprechende Anzahl von Messungen, insbesondere auch Referenzmessungen durchführt.

9. Verfahren nach wenigstens einem der vorangehenden Ansprüche, **dadurch gekennzeichnet**, daß eine Strahlungsquelle die Strahlungsenergie in Form von elektromagnetischer Strahlung (1) abgibt.

10. Verfahren nach Anspruch 9, **dadurch gekennzeichnet**, daß die Strahlungsquelle elektromagnetische Strahlung (1) in Form von monochromatischem p-polarisiertem Licht abgibt.

11. Verfahren nach wenigstens einem der Ansprüche, **dadurch gekennzeichnet**, daß eine Sammel- und Zufuhreinrichtung (2, 3) das Licht (1) der Materialschicht (6,10,22) als Parallellicht zuführt.

12. Verfahren nach wenigstens einem der vorangehenden Ansprüche, **dadurch gekennzeichnet**, daß eine Modulationseinrichtung die Strahlung mit einer definierten Frequenz moduliert und die Auswerteeinheit (15) das Signal des Sensors (20) phasenrichtig detektiert.

13. Verfahren nach wenigstens einem der vorangehenden Ansprüche, **dadurch gekennzeichnet**, daß eine Probe (8) auf der Materialschicht oder auf zumindest einer Kontaktstelle (16) des Sensors (20) aufgebracht ist, der Sensor die durch die Probe modifizierten Oberflächenplasmonen nachweist und die Auswerteeinheit (15) ein für die Probe (8) charakteristisches, modifiziertes Plasmonensprektrum bestimmt und eine charakteristische Sensorsignalform mißt.

14. Verfahren nach wenigstens einem der vorangehenden Ansprüche, **dadurch gekennzeichnet**, daß an einer Vielzahl von Stellen innerhalb einer die Probe (8) enthaltenen Probenkammer (7) elektrothermische Sensoren (20) lokal die durch die Zerfallswärme der Oberflächenplasmonen hervorgerufene Temperaturerhöhung messen.

15. Vorrichtung zur Durchführung des Verfahrens nach wenigstens einem der vorangehenden Ansprüche mit einer Strahlungsquelle zum Aussenden von elektromagnetischer Strahlung (1), einer Sammel- und Zufuhreinrichtung (2, 3) zur Erzeugung von Parallelstrahlung aus der elektromagnetischen Strahlung, wobei die Einrichtung die Parallelstrahlung der dünnen Materialschicht in ihrem Bestrahlungsbereich zur Anregung von Oberflächenplasmonen zuführt, **dadurch gekennzeichnet**, daß der dünnen Materialschicht wenigstens ein die Temperaturerhöhung der Materialschicht messender Sensor (20) zugeordnet ist.

16. Vorrichtung nach Anspruch 15, **dadurch gekennzeichnet**, daß der Sensor (20) als Thermoelement mit einem ersten (6) und einem zweiten (10) leitfähigen Materialfilm ausgebildet ist, welche einander unter Bildung zumindest einer Kontaktstelle (16) überlappen.

17. Vorrichtung nach Anspruch 16, **dadurch gekennzeichnet**, daß wenigstens der erste leitfähige Film (6) die dünne Materialschicht bildet.

18. Vorrichtung nach wenigstens einem der Ansprüche 15 bis 17, **dadurch gekennzeichnet**, daß die leitfähigen Filme (6, 10,22) aus Metall, einem Halbleiter oder einer leitfähigen Legierung gebildet sind.

19. Vorrichtung nach wenigstens einem der Ansprüche 15 bis 18, **dadurch gekennzeichnet**, daß die Filme eine Dicke von weniger als 500 A aufweisen.

20. Vorrichtung nach wenigstens einem der Ansprüche 15 bis 19, **dadurch gekennzeichnet**, daß die Filmdicke vorzugsweise 50 bis 300 A beträgt.

21. Vorrichtung nach wenigstens einem der Ansprüche 15 bis 20, **dadurch gekennzeichnet**, daß der erste Film (6) aus Gold und der zweite Film (10) aus Silber gebildet ist.

22. Vorrichtung nach Anspruch 21, **dadurch gekennzeichnet**, daß Gold und Silber in reiner Form oder dotiert einsetzbar sind.

23. Vorrichtung nach wenigstens einem der Ansprüche 15 bis 22, **dadurch gekennzeichnet**, daß das Thermoelement (20) auf einem Substrat (5) aufgebracht ist.

24. Vorrichtung nach Anspruch 23, **dadurch gekennzeichnet**, daß eine Vielzahl von Thermoelementen (20) auf dem Substrat (5) aufgebracht sind.

25. Vorrichtung nach Anspruch 24, **dadurch gekennzeichnet**, daß die Thermoelemente (20) einen gemeinsamen Leiter (10) und eine Vielzahl von Einzelleitern (6) aufweisen.

26. Vorrichtung nach wenigstens einem der Ansprüche 15 bis 25, **dadurch gekennzeichnet**, daß die jeweilige Kontaktstelle (16) der Thermoelemente (20) innerhalb des von der elektromagnetischen Strahlung bestrahlten Bereichs (18) angeordnet ist.

27. Vorrichtung nach wenigstens einem der Ansprüche 15 bis 26, **dadurch gekennzeichnet**, daß zumindest auf einer Kontaktstelle (16) des Thermoelements (20) eine zu messende Probe (8) aufgebracht ist.

28. Vorrichtung nach wenigstens einem der Ansprüche 15 bis 27, **dadurch gekennzeichnet**, daß Materialschicht (22), erste und zweite leitfähige Materialfilme (6,10) die gleiche Dicke aufweisen, und aus dem gleichen Material gebildet sind.

29. Vorrichtung nach wenigstens einem der Ansprüche 15 bis 28, **dadurch gekennzeichnet**, daß die Thermoelemente mit einer Auswerteeinheit verbunden sind.

30. Vorrichtung nach Anspruch 29, **dadurch gekennzeichnet**, daß die Verbindung zwischen Thermoelementen und der Auswerteeinheit (15) durch Kupfer-, Silber- oder Goldverbindungen (12,14) erfolgt.

31. Vorrichtung nach wenigstens einem der Ansprüche 15 bis 30, **dadurch gekennzeichnet**, daß das Substrat (5) mit dem Thermoelement (20) eine austauschbare Einheit bildet.

32. Vorrichtung nach wenigstens einem der Ansprüche 15 bis 31, **dadurch gekennzeichnet**, daß die leitfähigen Filme (6, 10) des Thermoelements (20) auf dem Substrat (5) durch Verwendung entsprechender Masken auftragbar sind.

33. Vorrichtung nach wenigstens einem der Ansprüche 15 bis 32, **dadurch gekennzeichnet**, daß die Sammel- und Zufuhreinrichtung (2, 3) wenigstens eine Zylinderlinse (3) oder ein Prisma aufweist.

34. Vorrichtung nach wenigstens einem der Ansprüche 15 bis 33, **dadurch gekennzeichnet**, daß zwischen der Sammel- und Zufuhreinrichtung (2, 3) und dem Substrat (5) eine Immersionsflüssigkeit (4) angeordnet ist.

35. Vorrichtung nach wenigstens einem der Ansprüche 15 bis 34, **dadurch gekennzeichnet**, daß die Strahlungsquelle monochromatisches p-polarisiertes Licht (1) abgibt.

36. Thermoelement, insbesondere zum Nachweis von Oberflächenplasmonen, mit wenigstens einem ersten und einem zweiten Leiter (6, 10), **dadurch gekennzeichnet**, daß mindestens ein Leiter als leitfähiger Film (6, 10) mit einer Filmdicke von 50 A bis 600 A ausgebildet sind.

37. Thermoelement nach Anspruch 36, **dadurch gekennzeichnet**, daß die Filmdicke vorzugsweise 200 A bis 400 A beträgt.

38. Thermoelement nach Anspruch 36 oder 37, **dadurch gekennzeichnet**, daß die Filme aus einem Metall, einem Halbleiter cder einer leitfähigen Legierung gebildet sind.

39. Thermoelement nach wenigstens einem der Ansprüche 36 bis 38, **dadurch gekennzeichnet**, daß eine Anzahl von ersten Leitern (6) den zweiten Leiter (10) kontaktieren und eine entsprechende Anzahl von Kontaktstellen (16) benachbart zueinander angeordnet sind.

40. Thermoelement nach wenigstens einem der Ansprüche 36 bis 39, **dadurch gekennzeichnet**, daß die Kontaktstelle oder die Kontaktstellen in einem Flächenbereich mit einer Fläche von kleiner oder gleich einem mm² angeordnet sind.

41. Thermoelement nach wenigstens einem der Ansprüche 36 bis 40, **dadurch gekennzeichnet**, daß der erste Film aus Gold und der zweite Film aus Silber gebildet ist.

## Claims

1. A process for detecting surface plasmons which are excited in a thin layer of material by a radiation energy supplied through an irradiation region (18) of the layer of material (6, 22) and which emit decomposition heat causing an increase in temperature in the layer of material upon their decomposition, characterized in that an electrothermal sensor (20) allocated to the layer of material (6,22) measures the temperature of the layer of material in the irradiation region (18) and emits a signal corresponding to the increase in temperature.

2. A process according to claim 1, characterized in that an evaluation unit (15) determines a plasmon spectrum in the thin layer of material from the signal as a function of an angle of incidence ⊖ of the radiation energy relative to the layer of material (6, 22) or as a function of the frequency of the radiation energy.

3. A process according to claim 1 or 2, characterized in that the electrothermal sensor (20) measures a thermoelectrical effect.

4. A process according to claim 3, characterized in that the thermoelectrical effect is measured at at least one contact point (16) of first and second conductors (6, 10) forming the sensor (20).

5. A process according to claim 4, characterized in that the radiation energy (1) is supplied at least in the area of the contact point (16) of the layer of material (6, 10).

6. A process according to at least *any* of the preceding claims, characterized in that the sensor (20) measures the increase in temperature by means of a direct or indirect contact with a surface of the thin layer of material.

7. A process according to at least any of the preceding claims, characterized in that the thin layer of material forms at least one conductor (6) of the sensor (20).

8. A process according to at least any of the preceding claims, characterized in that the evaluation unit (15) carries out a corresponding number of measurements, in particular also reference measurements, by means of a simultaneous or sequential reading out of a sensor (20) with a plurality of contact points (16).

9. A process according to at least any of the preceding claims, characterized in that a radiation source emits the radiation energy in the form of electromagnetic radiation (1).

10. A process according to claim 9, characterized in that the radiation source emits electromagnetic radiation (1) in the form of monochromatic, p-polarized light.

11. A process according to at least any of the preceding claims, characterized in that a collecting and supplying means (2, 3) supplies the light (1) as a parallel light to the layer of material (6, 10, 22).

12. A process according to at least any of the preceding claims, characterized in that a modulation means modulates the radiation with a defined frequency and the evaluation unit (15) detects the signal of the sensor (20) in phase-correct fashion.

13. A process according to at least any of the preceding claims, characterized in that a specimen (8) is applied onto the layer of material or onto at least one contact point (16) of the sensor (20), the sensor detects the surface plasmons modified by the specimen and the evaluation unit (15) determines a modified plasmon spectrum characteristic of the specimen (8) and measures a characteristic sensor signal shape.

14. A process according to at least any of the preceding claims, characterized in that electrothermal sensors (20) measure locally the increase in temperature caused by the decomposition heat of the surface plasmons at a plurality of points within a specimen chamber (7) containing the specimen (8).

15. A device for carrying out the process according to at least any of the preceding claims, which comprises a radiation source for emitting electromagnetic radiation (1), a collecting and supplying means (2, 3) for generating a parallel radiation from the electromagnetic radiation, the means supplying the parallel radiation to the thin layer of material in its irradiation region for exciting surface plasmons, characterized in that at least one sensor (20) measuring the increase in temperature of the layer of material is allocated to the thin layer of material.

16. A device according to claim 15, characterized in that the sensor (20) is designed as a thermocouple with a first(6) and a second (10) conductive film of material, which overlap each other forming at least one contact point (16).

17. A device according to claim 16, characterized in that at least the first conductive film (6) forms the thin layer of material.

18. A device according to at least one of claims 15 to 17, characterized in that the conductive films (6, 10, 22) are made of metal, a semiconductor or a conductive alloy.

19. A device according to at least one of claims 15 to 18, characterized in that the films have a thickness of less than 500 Å.

20. A device according to at least one of claims 15 to 19, characterized in that the film thickness is preferably 50 to 300 Å.

21. A device according to at least one of claims 15 to 20, characterized in that the first film (6) is made of gold and the second film (10) is made of silver.

22. A device according to claim 21, characterized in that gold and silver can be used in pure form or doped.

23. A device according to at least one of claims 15 to 22, characterized in that the tfiermocouple (20) is applied onto a substrate (5).

24. A device according to claim 23, characterized in that a plurality of thermocouples (20) are applied onto the substrate (5).

25. A device according to claim 24, characterized in that the thermocouples (20) have a common conductor (10) and a plurality of individual conductors (6).

26. A device according to at least one of claims 15 to 25, characterized in that the respective contact point (16) of the thermocouples (20) is disposed within the range (18) irradiated by the electromagnetic radiation.

27. A device according to at least one of claims 15 to 26, characterized in that a specimen (8) to be measured is applied onto at least one contact point (16) of the thermocouple (20).

28. A device according to at least one of claims 15 to 27, characterized in that the layer of material (22) and the first and second conductive films of material (6, 10) have the same thickness and are formed from the same material.

29. A device according to at least one of claims 15 to 28, characterized in that the thermocouples are connected to an evaluation unit.

30. A device according to claim 29, characterized in that the connection between thermocouples and the evaluation unit (15) is effected by copper, silver or gold connections (12, 14).

31. A device according to at least one of claims 15 to 30, characterized in that the substrate (5) forms an exchangeable unit together with the thermocouple (20).

32. A device according to at least one of claims 15 to 31, characterized in that the conductive films (6, 10) of the thermocouple (20) can be applied onto the substrate (5) using corresponding masks.

33. A device according to at least one of claims 15 to 32, characterized in that the collecting and supplying means (2, 3) preferably has a cylindrical lens (3) or a prism.

34. A device according to at least one of claims 15 to 33, characterized in that an immersion liquid (4) is disposed between the collecting and supplying means (2, 3) and the substrate (5).

35. A device according to at least one of claims 15 to 34, characterized in that the radiation source emits monochromatic, p-polarized light (1).

36. A thermocouple, in particular for detecting surface plasmons, which comprises at least one first and one second conductor (6, 10), characterized in that at least one conductor is formed as a conductive film (6, 10) with a film thickness of 50 Å to 600 Å.

37. A thermocouple according to claim 36, characterized in that the film thickness is preferably 200 to 400 Å.

38. A thermocouple according to claim 36 or 37, characterized in that the films are formed from a metal, a semiconductor or a conductive alloy.

39. A thermocouple according to at least one of the claims 36 to 38, characterized in that a number of first conductors (6) contact the second conductor (10) and a corresponding number of contact points (16) are disposed adjacent to each other.

40. A thermocouple according to at least one of the claims 36 to 39, characterized in that the contact point or the contact points is (are) disposed in a surface area with a surface of less than or equal to 1 mm².

41. A thermocouple according to at least one of claims 36 to 40, characterized in that the first film is made of gold and the second film is made of silver.

## Revendications

1. Procédé de détection de plasmons superficiels qui sont excités dans une mince couche de matériau par une énergie de rayonnement passant dans une zone d'exposition (18) de la couche de matériau (6, 22) et qui, lors de leur désagrégation, libèrent une chaleur de désagrégation produisant une élévation de température dans la couche de matériau, **caractérisé** en ce qu'un capteur (20) électrothermique associé à la couche de matériau (6, 22) mesure la température de la couche de matériau dans la zone d'exposition (18) et délivre un signal correspondant à l'élévation de température.

2. Procédé selon la revendication 1, **caractérisé** en ce qu'une unité d'exploitation (15) détermine un spectre de plasmons dans la mince couche de matériau à partir du signal, en fonction d'un angle d'incidence Φ de l'énergie du rayonnement par rapport à la couche de matériau (6, 22) ou en fonction de la fréquence de l'énergie du rayonnement.

3. Procédé selon la revendication 1 ou 2, **caractérisé** en ce que le capteur (20) électrothermique mesure un effet thermoélectrique.

4. Procédé selon la revendication 3, **caractérisé** en ce que l'effet thermoélectrique est mesuré en au moins un point de contact (16) de premiers et seconds conducteurs (6, 10) électriques formant le capteur (20).

5. Procédé selon la revendication 4, **caractérisé** en ce que l'énergie de rayonnement (1) est amenée au moins dans la zone du point de contact (16) de la couche de matériau (6, 10).

6. Procédé selon au moins l'une des revendications précédentes, **caractérisé** en ce que le capteur (20) mesure l'élévation de température par contact direct ou indirect avec une surface de la mince couche de matériau.

7. Procédé selon au moins l'une des revendications précédentes, **caractérisé** en ce que la mince couche de matériau forme au moins un conducteur (6) du capteur (20).

8. Procédé selon au moins l'une des revendications précédentes, **caractérisé** en ce que l'unité d'exploitation (15) effectue, par lecture simultanée ou séquentielle d'un capteur (20) avec une pluralité de points de contact (16), un nombre correspondant de mesures, en particulier également de mesures de référence.

9. Procédé selon au moins l'une des revendications précédentes, **caractérisé** en ce qu'une source de rayonnement émet l'énergie de rayonnement sous la forme d'un rayonnement (1) électromagnétique.

10. Procédé selon la revendication 9, **caractérisé** en ce que la source de rayonnement émet un rayonnement (1) électromagnétique sous la forme d'une lumière monochromatique de polarisation P.

11. Procédé selon au moins l'une des revendications précédentes, **caractérisé** en ce qu'un dispositif collecteur et d'amenée (2, 3) amène la lumière (1) de la couche de matériau (6, 10, 22) sous forme de lumière parallèle.

12. Procédé selon au moins l'une des revendications précédentes, **caractérisé** en ce qu'un dispositif de modulation module le rayonnement avec une fréquence défini et l'unité d'exploitation (15) détecte le signal du capteur (20) correctement du point de vue de la phase.

13. Procédé selon au moins l'une des revendications précédentes, **caractérisé** en ce qu'un échantillon (8) est appliqué sur la couche de matériau ou sur au moins un point de contact (16) du capteur (20), le capteur détecte les plasmons superficiels modifiés par l'échantillon et l'unité d'exploitation (15) détermine un spectre de plasmons modifié caractéristique de l'échantillon (8) et mesure une forme de signal de capteur caractéristique.

14. Procédé selon au moins l'une des revendications précédentes, **caractérisé** en ce que en une pluralité de points, à l'intérieur d'une chambre (7) contenant l'échantillon (8), des capteurs (20) électrothermiques mesurent localement l'élévation de température produite par la chaleur de désagrégation des plasmons superficiels.

15. Dispositif pour la mise en oeuvre du procédé selon au moins l'une des revendications précédentes comportant une source de rayonnement destinée à émettre un rayonnement (1) électromagnétique, un dispositif collecteur et d'amenée (2, 3) destiné à produire un rayonnement parallèle à partir du rayonnement électromagnétique, le dispositif amenant le rayonnement parallèle de la mince couche de matériau dans sa zone d'exposition en vue d'exciter des plasmons superficiels, **caractérisé** en ce que au moins un capteur (20) mesurant l'élévation de température de la couche de matériau est associé à la mince couche de matériau.

16. Dispositif selon la revendication 15, **caractérisé** en ce que le capteur (20) est réalisé sous forme de thermocouple avec un premier (6) et un deuxième (10) films de matériau conducteurs qui se chevauchent en formant au moins un point de contact (16).

17. Dispositif selon la revendication 16, **caractérisé** en ce que au moins le premier film (6) conducteur forme la mince couche de matériau.

18. Dispositif selon au moins l'une des revendications 15 à 17, **caractérisé** en ce que les films (6, 10, 22) conducteurs sont constitués d'un métal, d'un semi-conducteur ou d'un alliage conducteur.

19. Dispositif selon au moins l'une des revendications 15 à 18, **caractérisé** en ce que les films ont une épaisseur inférieure à 500 A.

20. Dispositif selon au moins l'une des revendications 15 à 19, **caractérisé** en ce que l'épaisseur des films est de préférence comprise entre 50 et 300 A.

21. Dispositif selon au moins l'une des revendications 15 à 20, **caractérisé** en ce que le premier film (6) est en or et le deuxième film (10) est en argent.

22. Dispositif selon la revendication 21, **caractérisé** en ce que l'on peut utiliser de l'or et de l'argent purs ou dopés.

23. Dispositif selon au moins l'une des revendications 15 à 22, **caractérisé** en ce que le thermocouple (20) est appliqué sur un substrat (5).

24. Dispositif selon la revendication 23, **caractérisé** en ce qu'une pluralité de thermocouples (20) sont appliqués sur le substrat (5).

25. Dispositif selon la revendication 24, **caractérisé** en ce que les thermocouples (20) comportent un conducteur (10) commun et une pluralité de conducteurs (6) individuels.

26. Dispositif selon au moins l'une des revendications 15 à 25, **caractérisé** en ce que le point de contact (16) des thermocouples (20) est disposé à l'intérieur de la zone (18) exposée au rayonnement électromagnétique.

27. Dispositif selon au moins l'une des revendications 15 à 26, **caractérisé** en ce qu'un échantillon (8) à mesurer est disposé au moins sur un point de contact (16) du thermocouple (20).

28. Dispositif selon au moins l'une des revendications 15 à 27, **caractérisé** en ce que la couche de matériau (22), les premiers et les seconds films de matériau (6, 10) conducteurs ont la même épaisseur et sont constitués du même matériau.

29. Dispositif selon au moins l'une des revendications 15 à 28, **caractérisé** en ce que les thermocouples sont reliés à une unité d'exploitation.

30. Dispositif selon la revendication 29, **caractérisé** en ce que les thermocouples et l'unité d'exploitation (15) sont reliés par des liaisons en cuivre, en argent ou en or (12, 14).

31. Dispositif selon au moins l'une des revendications 15 à 30, **caractérisé** en ce que le substrat (5) forme avec le thermocouple (20) une unité interchangeable.

32. Dispositif selon au moins l'une des revendications 15 à 31, **caractérisé** en ce que les films (6, 10) conducteurs du thermocouple (20) peuvent être appliqués sur le substrat (5) moyennant l'utilisation de masques appropriés.

33. Dispositif selon au moins l'une des revendications 15 à 32, **caractérisé** en ce que le dispositif collecteur et d'amenée (2, 3) comporte au moins une lentille cylindrique (3) ou un prisme.

34. Dispositif selon au moins l'une des revendications 15 à 33, **caractérisé** en ce qu'un liquide d'immersion (4) est disposé entre le dispositif collecteur et d'amenée (2, 3) et le substrat (5).

35. Dispositif selon au moins l'une des revendications 15 à 34, **caractérisé** en ce que la source de rayonnement émet une lumière (1) monochromatique de polarisation P.

36. Thermocouple, en particulier pour la détection de plasmons superficiels, comportant au moins un premier et un deuxième conducteurs (6, 10), **caractérisé** en ce que au moins un conducteur est réalisé sous forme de film (6, 10) conducteur d'une épaisseur comprise entre 50 et 600 A.

37. Thermocouple selon la revendication 36, **caractérisé** en ce que l'épaisseur de film est comprise de préférence entre 200 et 400 A.

38. Thermocouple selon la revendication 36 ou 37, **caractérisé** en ce que les films sont constitués d'un métal, d'un semi-conducteur ou d'un alliage conducteur.

39. Thermocouple selon au moins l'une des revendications 36 à 38, **caractérisé** en ce qu'une pluralité de premiers conducteurs (6) est en contact avec le deuxième conducteur (10) et un nombre correspondant de points de contact (16) sont disposés au voisinage les uns des autres.

40. Thermocouple selon au moins l'une des revendications 36 à 39, **caractérisé** en ce que le ou les point(s) de contact est (sont) disposé(s) sur une surface inférieure ou égale à un mm².

41. Thermocouple selon au moins l'une des revendications 36 à 40, **caractérisé** en ce que le premier film est en or et le deuxième film est en argent.
